# FASCICULE DE BREVET EUROPEEN

(11) **EP 0 863 341 B1**
(45) Date de publication et mention de la délivrance du brevet: **01.08.2001**
(21) Numéro de dépôt: 98390003.6
(22) Date de dépôt: 16.02.1998
(51) Int. Cl.: F16K 7/14

(54) **Vanne à membrane**
Membranventil
Diaphragm valve

(30) Priorité: 17.02.1997 FR 9701934
(43) Date de publication de la demande: 09.09.1998
(73) Titulaire: Qualiflow S.A., 34935 Montpellier Cedex 9 (FR); Transfluid SA, 2035 Corcelles (CH)
(72) Inventeur: Vuilleumier, Jean Jacques, CH-2035 Corcelles (CH)
(74) Mandataire: Ravina, Bernard

(56) Documents cités:
- EP-A- 0 627 583
- EP-A- 0 756 117
- US-A- 5 326 078

## Description

La présente invention a pour objet une vanne à membrane destinée au contrôle de circuits de fluides de haute pureté, comportant un siège de membrane sous forme d'une pièce de matériau, forme et traitement particuliers, insérée dans un logement formé à cet effet dans le corps de vanne. La vanne comporte par ailleurs un actionneur adapté à amener la membrane au contact du siège. L'invention concerne également un procédé de fabrication d'un type de siège pour vanne à membrane.

Dans la situation actuelle, la technologie des vannes de contrôle de fluide comprend d'une part les vannes dites à soufflet, et d'autre part les vannes à membrane. Les vannes à soufflet offrent des avantages d'excellent coefficient de débit et de possibilité de travailler en dépression jusqu'à un vide de 10-3 ou 10-4 Torr. Par contre, elles ont pour inconvénients principaux les problèmes de fabrication du soufflet du fait des contours mécaniques variables, ainsi qu'un volume mort interne important (mouillé par le fluide) dans la vanne augmentant considérablement le temps de purge des vannes. Enfin, ces vannes à soufflet présentent des problèmes de pollution du gaz par des particules issues du soufflet.

Les vannes à membrane comprennent un corps dans lequel sont ménagés des conduits d'amenée et d'évacuation du fluide, le conduit d'amenée débouchant dans une face en regard de laquelle est montée une membrane qui, par déformation, est susceptible d'isoler ou de mettre en communication les conduits d'amenée et d'évacuation de fluide, en obturant ou non l'extrémité du conduit d'amenée du fluide qui forme un siège pour la membrane.

Les vannes à membrane ont pour avantage majeur la simplicité de confection par rapport aux vannes à soufflet, avec une réalisation possible par emboutissage, pliage ou découpage. Par ailleurs elles offrent un volume mort très réduit et un état de surface meilleur menant à une pollution nettement plus réduite du gaz.

En contrepartie de ces avantages, elles présentent en particulier des problèmes de débit limité en position ouverte par le débattement de la membrane. Enfin des questions d'étanchéité du contact membrane / embase en position fermée se posent pour ce type de vanne.

Différentes améliorations ont été apportées aux vannes à membrane, en particulier dans le choix d'embases rondes plus précises (FR-A-2 677 424) ou par la définition de géométries de membranes permettant d'augmenter le débit en position ouverte de la vanne (FR-A-2 677 425).

Dans la technologie des vannes à membrane, des efforts ont été réalisés pour améliorer l'étancheïté.

C'est ainsi que le brevet EP O 627 583 prévoit un siège en un matériau synthétique sur lequel appuie la membrane déformable, ce siège pouvant être remplacé s'il est détérioré.

Le brevet US 5 326 078 décrit une vanne à membrane, laquelle appuie sur un siège rapporté implanté dans le matériau de la vanne et bloqué en position, par sa forme, dans une rainure du corps de la vanne.

La présente invention entend remédier au problème de l'étanchéité des vannes à membrane en proposant un corps de vanne modifié incorporant un siège en matériau choisi pour ses qualités de dureté et d'étanchéité en conjonction avec la membrane.

Selon un second but de l'invention, il est possible de réaliser différents types de vannes adaptés à des besoins particuliers, en changeant le type de siège assemblé avec un corps de vanne standardisé.

La possibilité d'aborder des domaines d'utilisation de ces vannes, par exemple cryogénie, jusqu'ici non accessibles du fait des limitations traditionnelles de ces vannes, constitue un troisième but de cette invention.

La capacité à changer le dispositif d'actionnement de la vanne sans ouvrir la ligne de fluide et donc sans risque de pollution dudit fluide constitue un quatrième but de l'invention.

A cet effet, la vanne selon l'invention de contrôle de flux de fluide gazeux ou liquide comprend un corps de vanne, une canalisation d'entrée de fluide, une canalisation d'évacuation de fluide, un piston actionneur de la vanne, le corps de vanne comportant un logement avec un siège entourant l'extrémité d'une des canalisations, ledit siège étant assemblé mécaniquement avec le corps de la vanne et d'axe approximativement confondu avec l'axe vertical du piston actionneur, une membrane entre le piston et le siège prenant appui sur le corps du siège lors de la fermeture en empêchant le passage du fluide, ladite membrane étant serrée par un couvercle sur le corps de vanne, ledit couvercle étant serré en position par un manchon vissé sur le corps de vanne qui présente un filetage à cet effet, le manchon et le couvercle étant munis d'un orifice axial de passage du piston actionneur de la membrane, se caractérisant en ce que le serrage de la membrane par le couvercle sur le corps de vanne s'effectue par un rebord extérieur de celle-ci et que le corps de siège est constitué d'une matière de caractéristiques mécaniques de dureté Vicker comprise entre 80 et 120, et que la couche de surface présente une dureté superficielle Vicker de l'ordre de 500 à 600 et que le piston actionneur prenant appui sur le siège présente une dureté superficielle comprise entre 250 et 400 V.

Grâce à cette disposition, les fonctions mécaniques du corps de vanne et les fonctions d'étanchéité du siège sont séparées, permettant pour ces deux fonctions différentes le choix des matériaux les mieux adaptés, et menant donc à la réalisation de vannes à membranes de meilleure étanchéité.

Cette disposition résulte du traitement de surface, d'un siège en Nickel typiquement, par une couche tribologique permettant de renforcer le potentiel redox et donc d'augmenter la résistance à la corrosion par des agents chimiques de la vanne.

Selon un mode particulier de réalisation, le coeur du siège est réalisé en alliage d'acier de type dit 316 L et de Nickel.

Selon un autre mode de réalisation, le coeur du siège est réalisé en Nickel pur.

Ce matériau possède une dureté de 95 Vicker, adaptée à recevoir éventuellement un traitement superficiel, et présente des applications en matière nucléaire, résistant à certaines gammes de radiations. Cette disposition permet des applications particulières dans les domaines médicaux et nucléaires, le nickel étant très peu perméable au passage de certaines particules radioactives, alors que le P.C.T.F.E. présente dejà une perméabilité (taux de diffusion) à des gaz ayant des molécules de faible masse atomique typiquement tels que : H2 Hydrogène et He Helium.

Selon un autre mode de réalisation, le coeur est réalisé en résine PCTFE (poly chloro tri fluor éthylène).

Cette matière, connue sous le nom usuel de Voltalef (pays francopjones) et de KEL-F (pays anglo-saxons), offre d'une part un faible facteur de diffusion de l'Hélium à travers ce corps que les autres matières présentant les mêmes caractéristiques de résistance à la corrosion et à l'attaque par des gaz acides tels que HCI, par exemple le Poly tetra fluor éthylène (PTFE, connu sous le nom usuel Teflon). D'autre part son choix est motivé par une courbe de refroidissement contrôlée liée à sa structure semi-cristalline, qui ouvre des possibilités d'utilisation à très basse température, jusqu'à par exemple -180° ou-200°C, et donc permet une utilisation pour des fluides cryogéniques Cette utilisation offre alors un domaine nouveau à l'utilisation de vannes à membranes. Les différentes dispositions précédentes montrent bien que le choix du type de matériau constituant le siège de la vanne est réalisé en fonction du type d'application qui est envisagé pour la vanne.

Selon un mode particulier de réalisation, le coeur du siège a subi un traitement par méthode PVD.

Ce traitement par dépôt de vapeur sous vide permet de réaliser des dépôts d'épaisseur très minces, par exemple quelques microns avec de matériaux tels que alliages de la gamme Hastelloy ou Inconel ou autres possédant des caractéristiques adaptées à assurer la résistance à la corrosion du siège entre pH 1 et pH 14.

Selon un mode particulier de réalisation, le siège est en forme d'anneau, avec une section approximativement pentagonale.

Ce choix de forme du siège permet d'une part son insertion dans un évidement conique créé à cet effet dans l'embase de la vanne, et d'autre part garantit un contact très étanche aux gaz, lorsque la membrane est en position fermée.

Selon un mode particulier de réalisation, le siège présente une section symétrique par rapport à l'axe vertical de ladite section, les deux faces latérales formant un angle de 1,25° plus ou moins 30' avec l'axe de la section du siège.

Ce choix d'angle de la gorge servant de logement au siège permet un assemblage en force sans aucun élément extérieur tel que colle, tout en autorisant un assemblage hermétique et réversible.

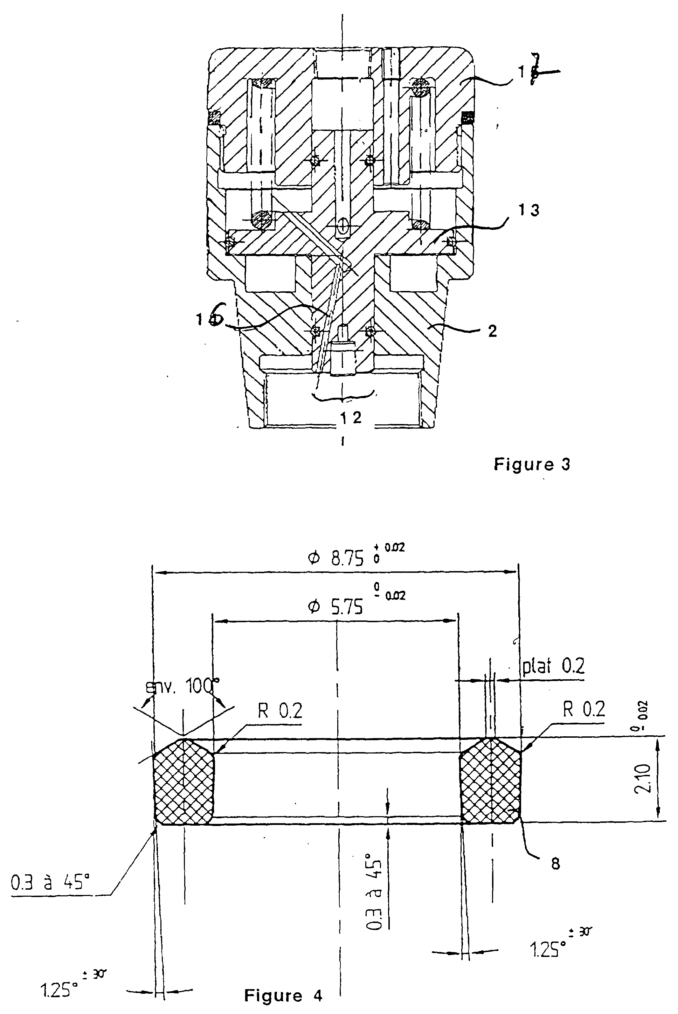

De préférence, comme représenté en figure 4, le siège 8 présente une paroi supérieure plane de faible largeur et deux parois inclinées vers le bas de part et d'autre de celle-ci en sorte que la surface d contact entre le siège et la membrane soit réduite.

Selon un procédé de fabrication préféré du siège en PCTFE, le siège est réalisé par décolletage.

Cette méthode se distingue des méthodes traditionnelles pour lesquelles une technologie d'injection est utilisée et qui peut être source de pollution due aux agents de démoulage couramment utilisés dans ce genre de technologie.

Selon une disposition particulière, la vanne de contrôle de flux de fluides gazeux ou liquides, comprenant un corps de vanne, une canalisation d'entrée de fluides, une canalisation d'évacuation de fluides, un dispositif d'obturation du flux gazeux, un système d'actionnement de la vanne, est caractérisée en ce que le système d'actionnement de la vanne permettant l'obturation du circuit de fluide est interchangeable sans rompre l'étanchéité du circuit de fluide.

Cette disposition est très intéressante dans le cadre d'environnements très exigeants tels qu'usines de semi-conducteurs ou autres pour lesquels l'ouverture de la ligne de fluide peut amener une pollution du fluide.

Selon une disposition encore plus particulière, la vanne à membrane comporte un manchon fixé sur le corps de la vanne, ledit manchon venant comprimer le rebord latéral extérieur de la membrane, éventuellement par l'intermédiaire d'une pièce intermédiaire nommée couvercle de serrage, pour assurer l'étanchéité de la vanne vis à vis de l'environnement extérieur, lesdits manchon et couvercle de serrage présentant un évidement central permettant le libre passage d'un système d'actionnement de la membrane.

Cette mise en oeuvre simple de la disposition précédente autorise la réalisation simple d'un assemblage garantissant la non ouverture de la ligne de fluide même lors d'un changement de dispositif d'actionnement.

Selon une mise en oeuvre encore plus particulière, la vanne de contrôle de flux de fluides gazeux ou liquides est caractérisée en ce que le système d'appui sur la membrane, qui vient traverser le manchon de serrage, présente un canal le traversant de bas en haut et permettant le passage des fluides présent au voisinage supérieur de la membrane.

Cette disposition permet la détection de fuites de gaz au niveau de la membrane et donc permet un contrôle permanent du fonctionnement correct de la vanne, en particulier dans le cas de fluides corrosifs.

La description qui va suivre, donnée à titre indicatif et nullement limitatif permet de mettre en évidence les caractéristiques et avantages de l'invention.

La figure 1 schématise une vanne avec ses différents éléments principaux.

La figure 2 représente une vue en coupe verticale du corps de vanne assemblé.

La figure 3 schématise l'actionneur de la vanne.

La figure 4 montre une vue en coupe verticale d'un siège selon l'invention.

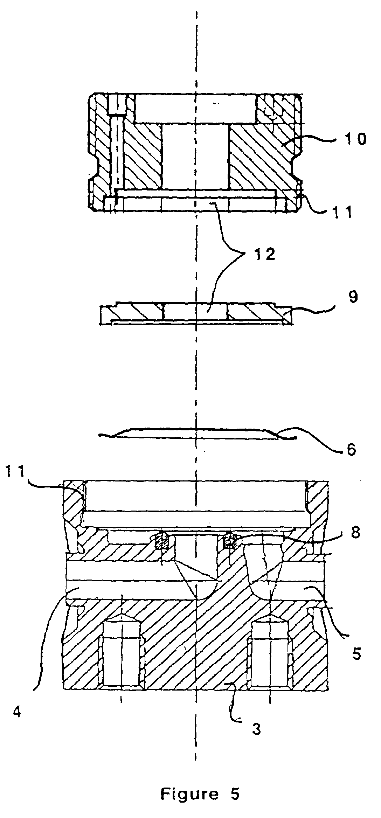

La figure 5 montre en vue éclatée les différentes pièces constituant le dispositif obturateur de la vanne.

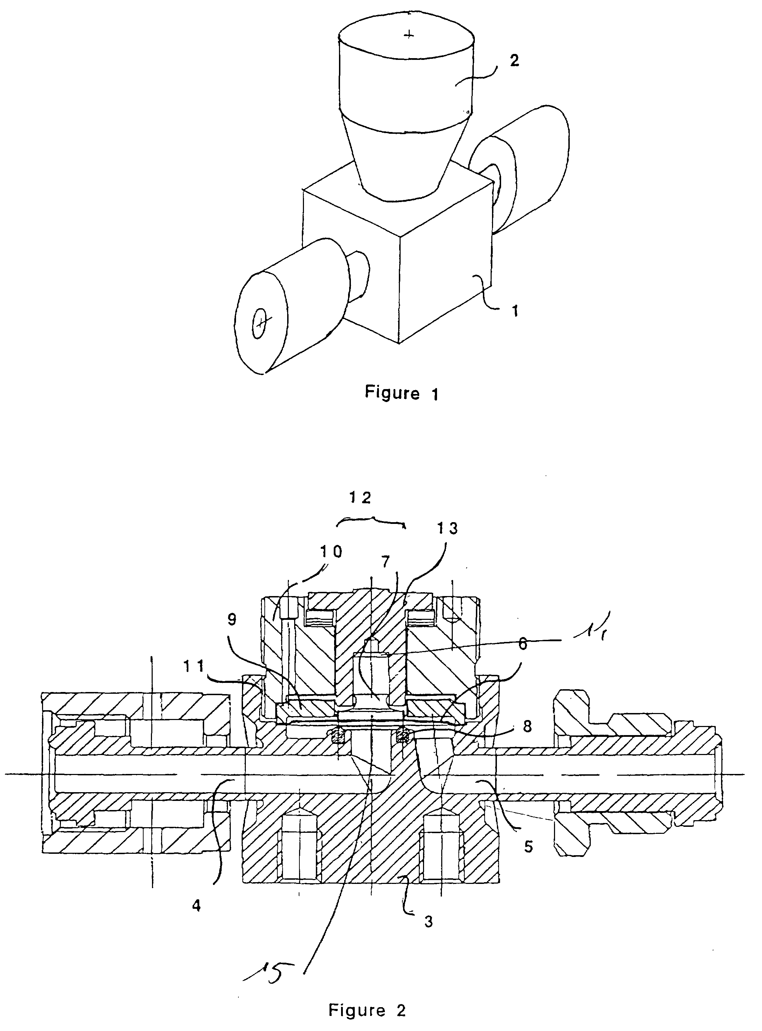

Tel que représenté selon une disposition classique sur la figure 1, la vanne selon l'invention comprend un corps de vanne (1) qui constitue la partie inférieure de la vanne, et sur lequel est monté l'actionneur (2), de nature manuelle ou mécanique.

De façon plus détaillée tel qu'il est visible sur la vue en coupe (Fig. 2), le corps de vanne (1) comprend une embase de vanne (3) dans laquelle sont ménagés les conduits d'arrivée (4) et d'évacuation des fluides (5), la membrane (6) formant dispositif de fermeture de la vanne lorsque le piston (7, 13) vient déformer la membrane pour l'appliquer de façon hermétique sur le rebord du conduit d'arrivée des gaz. Le corps de vanne est de nature connue, et son mode de réalisation est connu de l'homme de l'art. Il ne sera donc pas décrit plus avant ici.

Selon la présente invention, le corps de vanne comporte une gorge conique destinée à recevoir le siège (8) fixé par blocage, sur lequel vient s'appuyer la membrane (6) en position fermée. Le siège (8) est réalisé préférentiellement en résine synthétique de type PCTFE (Poly-Chloro-Tri-Fluor-Ethylène) ou en alliage métallique, par exemple Acier 316L et Nickel, ou Nickel pur. Les fabrications en alliage métallique permettent la réalisation de vannes dont tous les composants sont réalisés en métal, dont l'objet est le faible facteur d'adsorption d'humidité (vapeur d'eau ambiante), ainsi que le contrôle de la réduction des particules créées par la vanne elle-même, ces vannes étant donc adaptées au contrôle de flux de gaz de très haute pureté. Le but est de maitriser le relargage de particules, par exemple par un traitement par électropolissage des pièces. Des qualités équivalentes vis à vis du relargage de particules ne peuvent être obtenues avec des pièces réalisées en matière plastique.

En dehors de ces cas particuliers, les sièges seront plus classiquement fabriqués en résine synthétique, ou en alliage métallique recevant un traitement de surface. Un traitement par PVD (Plasma Vapor Deposition, traitement de dépôt sous vide) permet d'améliorer les qualités de résistance à la corrosion par le dépôt d'une épaisseur de typiquement 2 à 3 microns de matériau riches en Nickel (typiquement plus de 50%) et résistants aux agents chimiques par leurs autres composants compensant la résistance aux environnements de pH pourlesquels le Nickel n'est pas le meilleur matériau. Des matériaux correspondants à ces caractéristiques incluent par exemple l'Hasteloy ou l'Inconel.

L'assemblage du siège sur le corps de la vanne se fait par insertion en force dans le logement prévu à cet effet dans l'embase de la vanne. A cet effet, le choix d'un angle de 1,25° à plus ou moins 30' par rapport à l'axe perpendiculaire au corps de vanne pour les deux faces latérales du siège et de la gorge faisant effet de logement permet un montage en force sans aucun collage ou autre pièce, et apporte de plus une étanchéité du montage.

Le démontage d'un siège en PCTFE de son support peut se faire en utilisant de l'air chaud entraînant une dilatation différentielle du siège et de l'embase de vanne.

L'actionneur de la vanne (2) est classiquement vissé sur le corps de la vanne. Il se compose de plusieurs éléments. Tout d'abord au dessus de la membrane servant d'obturateur, un couvercle (9) vient prendre appui sur le rebord extérieur de la membrane. Ce couvercle est serré sur le rebord de la membrane par un manchon (10) vissé sur le corps de vanne qui présente un filetage (11) à cet effet. L'étanchéité de la vanne vis à vis de l'environnement extérieur est alors créée.

Le manchon et le couvercle de membrane sont tous deux munis d'un orifice axial (12) permettant le libre passage d'un système d'appui sur la partie centrale de la membrane, et créant ainsi les fonctions d'ouverture et de fermeture de la vanne. Ce dispositif garantit donc bien l'indépendance des fonctions d'une part d'étanchéité vis à vis de l'environnement éventuellement pollué de la vanne, et d'autre part de déclenchement de la vanne. Il devient alors possible de changer le système d'actionnement sans avoir à ouvrir la vanne et donc sans introduire de polluant dans la ligne de fluide. Cette disposition constitue un avantage majeur de cette vanne par rapport aux système connus.

Le plus souvent, le dispositif prenant appui sur la partie centrale de la membrane comprendra d'une part un sceau (7) de diamètre égal approximativement à celui de la zone centrale de la membrane et au diamètre du siège sur lequel la membrane vient prendre appui en position fermée, et d'autre part un piston (13) actionnant ce sceau.

Le piston 13 présente un logement axial 14 dans lequel est placé le fût du sceau dont la tête 15 en contact avec la membrane est de diamètre inférieur à celui du piston. Le piston 13 présente un fût cylindrique qui coulisse librement dans le manchon 10 et dans le couvercle 9 d'où il peut être retiré par démontage de l'actionneur 2, sans démontage du manchon et du couvercle, ce qui maintient en place la membrane 6 et assure l'étancheité du circuit. Cette disposition permet de choisir des caractéristiques de matériau et de dureté particulières pour le sceau, et un autre matériau pour le système d'actionnement. A titre d'exemple, le piston est en métal et le sceau peut être en un matériau synthétique.

Un perçage 16 réalisé dans le piston, un canal depuis sa partie basse (à proximité du sceau) jusqu'à une face placée au dessus de la limite supérieure du manchon de serrage permet la détection, par des capteurs adaptés, de fuites de gaz éventuelles au niveau de la membrane (figure 3).

Enfin, le piston est mû par un système (17) qui peut être soit mécanique par un vissage manuel du bouchon, soit pneumatique et contrôlé à distance. Ce système est classique et connu de l'homme de l'art.

La portée de la présente invention ne se limite pas aux modes de réalisation présentés mais s'étend au contraire aux perfectionnements et modifications à la portée de l'homme de l'art.

## Revendications

1. Vanne de contrôle de flux de fluide gazeux ou liquide comprenant un corps de vanne (3), une canalisation (4) d'entrée de fluide, une canalisation d'évacuation (5) de fluide, un piston actionneur (13/7) de la vanne, le corps de vanne comportant un logement avec un siège (8) entourant l'extrémité d'une des canalisations, ledit siège étant assemblé mécaniquement avec le corps de la vanne et d'axe approximativement confondu avec l'axe vertical du piston actionneur (13/7) une membrane (6) entre le piston et le siège prenant appui sur le corps du siège lors de la fermeture en empêchant le passage du fluide, ladite membrane (6) étant serrée par un couvercle (9) sur le corps de vanne, ledit couvercle étant serré en position par un manchon (10) vissé sur le corps de vanne qui présente un filetage (11) à cet effet, le manchon et le couvercle étant munis d'un orifice axial (12) de passage du piston actionneur (13/7) de la membrane, caractérisé en ce que le serrage de la membrane par le couvercle sur le corps de vanne s'effectue par un rebord extérieur de celle-ci et que le corps de siège (8) est constitué d'une matière de caractéristiques mécaniques de dureté Vicker comprise entre 80 et 120, et que la couche de surface présente une dureté superficielle Vicker de l'ordre de 500 à 600 et que le piston actionneur prenant appui sur le siège présente une dureté superficielle comprise entre 250 et 400 V.

2. Vanne selon la revendication 1 caractérisé en ce que le coeur du siège est réalisé en alliage d'acier de type dit 316 L et de Nickel.

3. Vanne selon l'une des revendications 1 ou 2 caractérisé en ce que le coeur du siège est réalisé en Nickel pur.

4. Vanne selon l'une des revendications 2 ou 3 caractérisé en ce que le coeur est réalisé en résine PTCFE (poly chloro tri fluor éthylène).

5. Vanne selon l'une des revendications 1 à 4 caractérisé en ce que le coeur du siège a subi un traitement de surface par méthode PVD.

6. Vanne selon l'une des revendications 1 à 5 caractérisé en ce que le siège est en forme d'anneau, avec une section de base approximativement pentagonale.

7. Vanne selon l'une des revendications 1 à 6 caractérisé en ce que le siège présente une section symétrique par rapport à l'axe vertical de ladite section, les deux faces latérales formant un angle de 1,25° plus ou moins 30' avec l'axe de section du siège.

8. Vanne selon la revendication 1 caractérisé en ce que le piston actionneur qui vient traverser le manchon de serrage, présente un canal (16) le traversant de bas en haut et permettant le passage des fluides présent au voisinage supérieur de la membrane.

9. Vanne selon la revendication 1 caractérisée en ce que le piston (13) est doté à sa base d'un logement (14) qui reçoit un sceau (7) dont la tête (15) a un diamètre égal à celui du siège sur lequel appuie la membrane sous la pression du piston actionneur (13).

## Patentansprüche

1. Ventil zur Steuerung des Durchflusses von gasförmigen oder flüssigen Medien bestehend aus einem Ventilgehäuse (3), einer Rohrleitung (4) für den Eintritt des Fluids, einer Rohrleitung (5) für den Ablauf des Fluids, einem Betätigungskolben (13/7) für das Ventil, wobei das Ventilgehäuse über eine Aufnahme mit einem Sitz (8) verfügt, der das Ende einer der Rohrleitungen umschließt, wobei der genannte Sitz mechanisch mit dem Ventilgehäuse zusammengebaut ist und die Achse annähernd mit der senkrechten Achse des Kolben (13/7) übereinstimmt, zwischen dem Kolben und dem Sitz befindet sich eine Membran (6), die beim Schließen des Ventils auf dem Hauptteil des Sitzes aufliegt und so den Durchfluss des Fluids verhindert, wobei die genannte Membran (6) durch einen Deckel (9) auf dem Ventilgehäuse befestigt ist und der genannte Deckel mit einer Muffe (10) in Position gehalten wird, die wiederum in das dazu auf dem Ventilgehäuse vorgesehene Gewinde (11) geschraubt ist, wobei die Muffe und der Deckel eine axiale Öffnung (12) für die Durchführung des Betätigungskolben (13/7) der Membran aufweisen, gekennzeichnet dadurch, dass die Befestigung der Membran durch den Deckel auf dem Ventilgehäuse durch eine äußere Leiste des Ventils erfolgt und dass das Gehäuse des Sitzes (8) aus einem Material mit mechanischen Eigenschaften was die Härte angeht zwischen 80 und 120 nach Vicker besteht, und dass die oberste Schicht eine Oberflächenhärte von 500 bis 600 nach Vicker aufweist und dass der Betätigungskolben, der sich auf den Sitz stützt, eine Oberflächenhärte zwischen 250 und 400 V aufweist.

2. Ventil nach Anspruch 1 dadurch gekennzeichnet, dass der Kern des Sitzes aus einer Legierung aus Stahl des Typs 316 L und Nickel hergestellt wird.

3. Ventil nach einem der Ansprüche 1 oder 2 dadurch gekennzeichnet, dass der Kern des Sitzes aus reinem Nickel hergestellt wird.

4. Ventil nach einem der Ansprüche 2 oder 3 dadurch gekennzeichnet, dass der Kern des Sitzes aus PTCFE-Harz (Polychlorfluoräthylen) hergestellt wird.

5. Ventil nach einem der Ansprüche 1 bis 4 dadurch gekennzeichnet, dass der Kern des Sitzes einer Oberflächenbehandlung nach PVD-Methode unterzogen wird.

6. Ventil nach einem der Ansprüche 1 bis 5 dadurch gekennzeichnet, dass der Sitz die Form eines Rings hat, dessen Grundriss in etwa der Form eines Fünfecks entspricht.

7. Ventil nach einem der Ansprüche 1 bis 6 dadurch gekennzeichnet, dass der Sitz einen symmetrischen Schnitt in bezug auf die senkrechte Achse des genannten Schnitts aufweist, wobei die beiden Seitenflächen einen Winkel von 1,25° mehr oder weniger 30' mit der Schnittachse des Sitzes bilden.

8. Ventil nach Anspruch 1 dadurch gekennzeichnet, dass der Betätigungskolben, der die Befestigungsmuffe durchquert, über einen Kanal (16) verfügt, der ihn von oben nach unten durchläuft und den Durchfluss des Fluids ermöglicht, das sich oberhalb der Membran in deren Umfeld ansammelt.

9. Ventil nach Anspruch 1 dadurch gekennzeichnet, dass der Kolben (13) an seiner Basis über eine Aufnahme (14) verfügt, in der eine Verschlussvorrichtung (7) Platz findet, deren Kopf (15) einen Durchmesser aufweist, der mit dem des Sitzes identisch ist, auf dem die Membran unter dem Druck des Betätigungskolbens (13) aufliegt.

## Claims

1. Valve for controlling the flow of gaseous fluid or liquid comprising a valve body (3), a fluid inlet conduit (4), a fluid evacuation conduit (5), an actuating piston (13/7) of the valve, the body of the valve comprising a recess with a seat (8) surrounding the end of one of the conduits, said seat being mechanically assembled with the body of the valve and with an axis approximately identical to the vertical axis of the actuating piston (13/7), a diaphragm (6) between the piston and the seat resting on the body of the seat when closed while preventing the passage of fluid, said diaphragm (6) being secured by a cover (9) on the body of the valve, said cover being secured in position by a sleeve (10) screwed on the body of the valve which presents a thread (11) for this purpose, the sleeve and the cover being equipped with an axial orifice (12) for the passage of the actuating piston (13/7) of the diaphragm, characterised in that the securing of the diaphragm by the cover on the body of the valve is carried out by an exterior edge thereof and that the body of the seat (8) is composed of a material with mechanical characteristics of Vicker pyramid hardness between 80 and 120 and that the surface layer has a superficial Vicker pyramid hardness in the range of 500 to 600 and that the actuating piston resting on the seat has a superficial hardness between 250 and 400 V.

2. Valve according to claim 1, characterised in that the core of the seat is produced from steel alloy of the type known as 316 L and nickel.

3. Valve according to any one of claims 1 or 2, characterised in that the core of the seat is produced from pure nickel.

4. Valve according to any one of claims 2 or 3, characterised in that the core is produced from PTFCE (polytrifluorochloroethylene) resin.

5. Valve according to any one of claims 1 to 4, characterised in that the core of the seat is subjected to a surface treatment by the PVD method.

6. Valve according to any one of claims 1 to 5, characterised in that the seat is in the form of a ring with an approximately pentagonal base section.

7. Valve according to any one of claims 1 to 6, characterised in that the seat has a symmetrical section with respect to the vertical axis of said section, the two lateral faces forming an angle of 1.25° plus or minus 30' with the axis of the seat section.

8. Valve according to claim 1, characterised in that the actuating piston which traverses the securing sleeve has a channel (16) traversing it from bottom to top and allowing the passage of fluids present in the region above the diaphragm.

9. Valve according to claim 1, characterised in that the piston (13) is equipped at its base with a recess (14) which receives a seal (7) of which the head (15) has a diameter equal to that of the seat on which the membrane rests under the pressure of the actuating piston (13).
